# EUROPEAN PATENT SPECIFICATION

(11) **EP 2 904 201 B1**
(45) Date of publication and mention of the grant of the patent: **23.08.2017**
(21) Application number: 13845799.9
(22) Date of filing: 01.05.2013
(51) Int. Cl.: E21B 43/36, B01D 19/00

(54) **MULTIPHASE SEPARATION SYSTEM AND METHOD**
SYSTEM UND VERFAHREN ZUR MEHRPHASENTRENNUNG
SYSTÈME ET MÉTHODE DE SÉPARATION DE MULTIPLES PHASES

(30) Priority: 08.10.2012 US 201261711132 P
(43) Date of publication of application: 12.08.2015
(73) Proprietor: ExxonMobil Upstream Research Company, Spring TX 77389 (US)
(72) Inventor: GRAVE, Edward, J., Spring, TX 77388 (US); BYMASTER, Adam, S., Humble, TX 77346 (US); FOWLER, Tracy, A., Sugar Land, TX 77478 (US)
(74) Representative: ExxonMobil Chemical Europe Inc.
(86) International application number: PCT/US2013/039080
(87) International publication number: WO 2014/058480

(56) References cited:
- CN-A- 101 402 004
- US-A- 1 559 115
- US-A- 4 661 127
- US-A1- 2006 162 553
- US-A1- 2008 272 059
- US-A1- 2010 212 492
- US-A1- 2011 072 975

## Description

### CROSS-REFERENCE TO RELATED APPLICATION

This application claims the benefit of U.S. Provisional Patent Application 61/711,132 filed October 8, 2012 entitled MULTIPHASE SEPARATION SYSTEM, and relates to U.S. Provisional Patent Application 61/676,573 filed on July 27, 2012 entitled MULTIPHASE SEPARATION SYSTEM.

### FIELD OF THE INVENTION

The present techniques provide for the separation of gases and liquids within production fluids. More specifically, the techniques provide for the separation of production fluids into gases and liquids using a subsea multiphase separation system.

### BACKGROUND

This section is intended to introduce various aspects of the art, which may be associated with exemplary embodiments of the present techniques. This discussion is believed to assist in providing a framework to facilitate a better understanding of particular aspects of the present techniques. Accordingly, it should be understood that this section should be read in this light, and not necessarily as admissions of prior art.

Any of a number of subsea separation techniques may be used to enhance the amount of oil and gas recovered from subsea wells. However, subsea separation at water depths greater 1500 meters becomes especially challenging due to the environmental conditions. As water depth increases, the external pressure on a vessel created by the hydrostatic head increases the required wall thickness for vessels used for subsea processing. At water depths greater than 1500 meters, this wall thickness has increased to such an extent that typical gravity separation is not practical. In addition, vessels with such a large wall thickness can be a challenge to fabricate, and the added material and weight can impact project economics, as well as the availability of the vessel for maintenance. As a result, large diameter separators often cannot be used at such depths. Documents US 2010/212492 and CN 101402004 disclose multistage separation systems.

### SUMMARY

The invention is as set out in the claims.

### BRIEF DESCRIPTION OF THE DRAWINGS

The advantages of the present techniques are better understood by referring to the following detailed description and the attached drawings, in which:
Fig. 1 is a block diagram showing a system for separating production fluids into a gas stream and a liquid stream using a multiphase separation system;
Fig. 2 is a perspective view of a multiphase separation system;
Fig. 3 is a side view of the multiphase separation system of Fig. 2;
Fig. 4 is a process flow diagram showing a method for separating gases and liquids within a multiphase fluid;
Fig. 5 is a perspective view of another multiphase separation system;
Fig. 6 is a side view of the multiphase separation system of Fig. 5;
Fig. 7 is a perspective view of another multiphase separation system; and
Fig. 8 is a side view of the multiphase separation system of Fig. 7.

### DETAILED DESCRIPTION

In the following detailed description section, specific embodiments of the present techniques are described. However, to the extent that the following description is specific to a particular embodiment or a particular use of the present techniques, this is intended to be for exemplary purposes only and simply provides a description of the exemplary embodiments. Accordingly, the techniques are not limited to the specific embodiments described below, but rather, include all alternatives, modifications, and equivalents falling within the true spirit and scope of the appended claims.

As discussed above, traditional large diameter separators face technical challenges at depths greater than approximately 1500 meters. Thus, embodiments described herein provide an unconventional separation system that is capable of achieving acceptable gas-liquid separation and damping potential flow fluctuations, while meeting the size and weight restrictions imposed on deepwater processing units. Further, the separation system can be designed to pipe code instead of vessel code, which may provide cost and weight savings. In many cases, for a given pressure class, the required wall thickness for a pipe is less than the required wall thickness for a corresponding vessel.

According to embodiments described herein, a compact, subsea multiphase separation system is used to enhance subsea well production, especially in deepwater and Arctic environments. In various embodiments, the subsea multiphase separation system is a four phase subsea separator that is configured to separate production fluids into a gas phase, an oil phase, an aqueous phase, and a solid phase. In other words, subsea separation may be used to create single phase streams. This may allow for the usage of single phase pumps, which are more efficient and can achieve larger pressure differentials compared to multiphase pumps. In order to pump a single phase stream, one single phase pump may be sufficient. In contrast, in order to pump a multiphase stream, a series of multiphase pumps may be used to achieve the same pressure differential, especially for high boosting applications.

The separation process described herein may be used to achieve bulk removal of aqueous fluids from production fluids. The removal of aqueous fluids is termed water removal herein, although this may be understood to include water with other contaminants, such as salts or other miscible fluids. Such bulk water removal may mitigate flow assurance concerns, by allowing substantially pure oil and/or gas streams to be sent to the surface. These substantially pure streams will form lower amounts of hydrates, such as methane clathrates, thus lowering the risk of plugging or flow restrictions. Further, corrosion concerns can be reduced or eliminated. The sand and water by-product streams can then be disposed topsides to dedicated disposal zones, reservoirs, the seabed, or the like.

Bulk water removal may also result in a decrease in the hydrostatic head acting on the reservoir, thus increasing both the reservoir drive and production. Further, the separation process may be used to reduce flow line infrastructure, reduce the number of topside water treating facilities, reduce power and pumping requirements, and de-bottleneck existing facilities that are challenged with declining production rates due to increased water cuts.

As used herein, the term "slug" refers to a small volume of fluid that is entrained within the production fluids and is often of a higher density than the production fluids, for example, a liquid zone carried along by gas flow in a pipeline. Slugs may affect the flow characteristics of the production fluids. In addition, slugs exiting a pipeline may overload the gas-liquid handling capacity of the subsea, topsides, or onshore processing facility at the pipeline outlet. Thus, according to embodiments described herein, one or more subsea multiphase slug catchers may be used to dampen or remove the slugs from the production fluids before the production fluids enter the export pipelines.

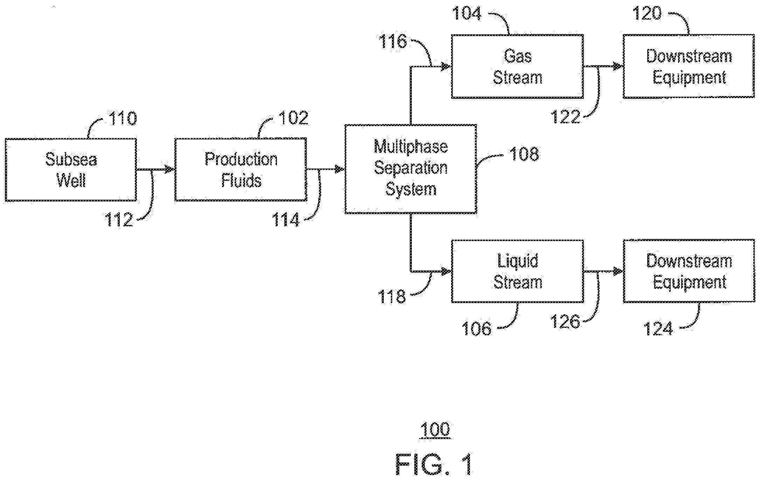

Fig. 1 is a block diagram showing a system **100** for separating production fluids **102** into a gas stream **104** and a liquid stream **106** using a multiphase separation system **108.** The production fluids **102** may be hydrocarbon fluids that include a mixture of natural gas, oil, brine, and solid impurities, such as sand. The production fluids **102** may be obtained from a subsea well **110,** as indicated by arrow **112.** The production fluids **102** may be obtained from the subsea well **110** via any type of subsea production system (not shown) that is configured to produce hydrocarbons from subsea locations.

In an embodiment, the production fluids **102** are flowed into the multiphase separation system **108,** as indicated by arrow **114.** The multiphase separation system **108** may be any type of vessel that is configured to achieve bulk separation of gas and liquid from the production fluids **102.** In addition, the multiphase separation system **108** may remove slugs from the production fluids **102.** The multiphase separation system **108** may be implemented within a subsea environment.

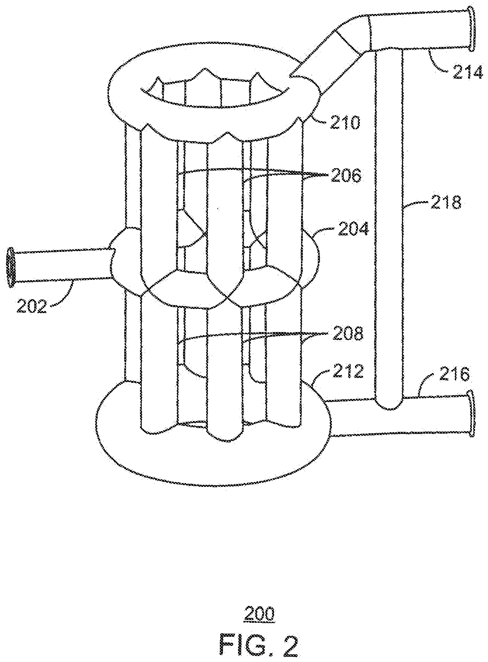

Within the multiphase separation system **108,** the production fluids **108** may be separated into the gas stream **104** and the liquid stream **106,** as indicated by arrows **116** and **118,** respectively. The gas stream **104** may include natural gas, while the liquid stream **106** may include water, oil, and other residual impurities, such as sand. Designs for the multiphase separation system **108,** as well as the mechanisms by which the multiphase separation system **108** may affect the quality of the separated gas stream **104** and the separated liquid stream **106,** are described with respect to Figs. 2-8.

In some embodiments, the gas stream **104** is flowed to downstream equipment **120,** as indicated by arrow **122.** The downstream equipment **120** may include, for example, any type of downstream gas processing equipment, such as a gas compressor, gas treatment facility, gas polishing device, or the like, or a gas pipeline. In addition, the liquid stream **106** may be flowed to downstream equipment **124,** as indicated by arrow **126.** The downstream equipment **124** may include, for example, oil and water pre-treating or coalescence equipment, such as a heating system, chemical injection system, electrostatic coalescer, or the like, a pipe separator or cyclone for oil-water separation, or a liquid export pipeline.

The block diagram of Fig. 1 is not intended to indicate that the system **100** is to include all of the components shown in Fig. 1. Further, any number of additional components may be included within the system **100,** depending on the details of the specific implementation. For example, the multiphase separation system **108** can be designed to achieve liquid/liquid separation, thus delivering two substantially pure oil and water streams to the downstream equipment **124.** Further, multiphase and single phase desanders may be placed upstream and/or downstream of the multiphase separation system **108.**

Fig. 2 is a perspective view of a non-claimed embodiment of a multiphase separation system **200.** The multiphase separation system **200** may include an inlet line **202** configured to feed the multiphase fluid into a circular distribution header **204.** The multiphase fluid may be any type of fluid that includes both liquid and gaseous components. For example, the multiphase fluid may be production fluids from a subsea well. The circular distribution header **204** may be coupled to a number of upper lines **206** and a number of lower lines **208.** The upper lines **206** and the lower lines **208** may be perpendicular to the circular distribution header **204.**

Each upper line **206** may feed gases within the multiphase fluid into a circular gas header **210.** The circular gas header **210** may be in a second plane that is above and substantially parallel to the circular distribution header **204.** In addition, each lower line **208** may feed liquids within the multiphase fluid into a circular liquid header **212.** The circular liquid header **212** may be below and substantially parallel to the circular distribution header **204.**

A gas outlet line **214** may be coupled to the circular gas header **210** and may be configured to flow the gases out of the multiphase separation system **200.** A liquid outlet line **216** may be coupled to the circular liquid header **212** and may be configured to flow the liquids out of the multiphase separation system **200.** The gas outlet line **214** and the liquid outlet line **216** may be coupled via a downcomer **218.** The downcomer **218** may be configured at a right angle or an oblique angle.

The downcomer **218** may allow entrained liquids within the gases to flow from the gas outlet line **214** to the liquid outlet line **216.** In addition, the downcomer **218** may allow entrained gases within the liquids to flow from the liquid outlet line **216** to the gas outlet line **214.** However, in some embodiments, the separation of gases and liquids may be sufficient in the upper lines **206** and the lower lines **208** perpendicular to the circular distribution header **204.** In this case, the downcomer **218** may be omitted from the multiphase separation system **200.**

The schematic of Fig. 2 is not intended to indicate that the subsea multiphase separation system **200** is to include all of the components shown in Fig. 2. Further, any number of additional components may be included within the subsea multiphase separation system **200,** depending on the details of the specific implementation. For example, the liquid outlet line **216** may be extended, with or without an optional sealing downcomer, to increase residence time in the liquid phase and achieve oil/water separation. This may allow for the enhancement or the elimination of downstream oil/water separation steps and equipment. In addition, the liquid outlet line **216** may include separate outlet lines for flowing the oil and water out of the multiphase separation system **200.**

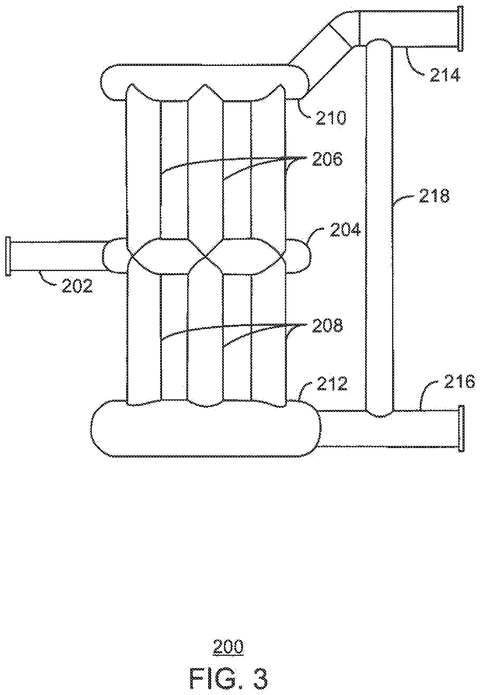

Fig. 3 is a side view of the multiphase separation system **200** of Fig. 2. As shown in Fig. 3, the circular distribution header **204** may be in the same plane as the inlet line **202.** Thus, the multiphase fluid may flow directly into the circular distribution header **204.** Due to the configuration of the circular distribution header **204,** the multiphase fluid flow may initially distribute along two flow paths within the circular distribution header **204,** resulting in a reduction in velocity of the multiphase fluid as it flows throughout the circular distribution header **204.** In some embodiments, such a reduction in velocity of the multiphase fluid dissipates any slugs within the multiphase fluid. In addition, the circular distribution header **204** may act as a stratification section that is configured to perform an initial bulk separation of gases and liquids within the multiphase fluid.

The upper lines **206** may be perpendicular to the circular distribution header **204** and may couple the circular distribution header **204** to the circular gas header **210.** The lower lines **208** may be perpendicular to the circular distribution header **204** and may couple the circular distribution header **204** to the circular liquid header **212.** The circular gas header **210** and the circular liquid header **212** may be parallel to the circular distribution header **204.**

In some embodiments, the circular gas header **210** acts as a droplet separation section configured to remove entrained liquids from the gases within the circular gas header **210.** In addition, in some embodiments, the circular liquid header **212** acts as a liquid degassing section configured to remove entrained gases from the liquids within the circular liquid header **212.**

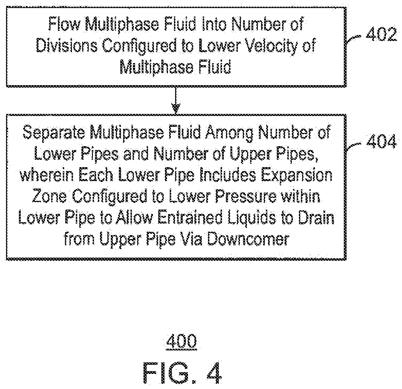

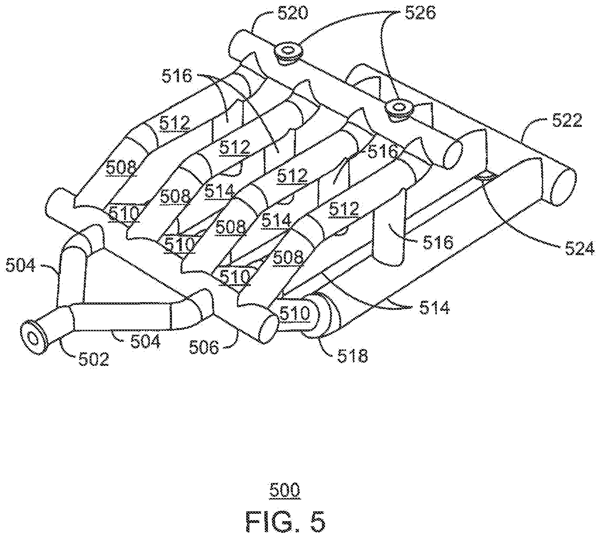

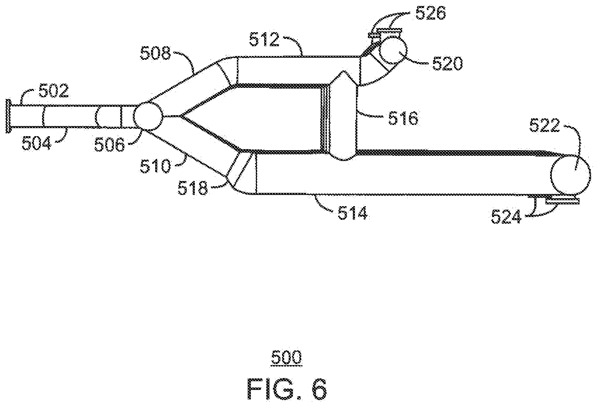

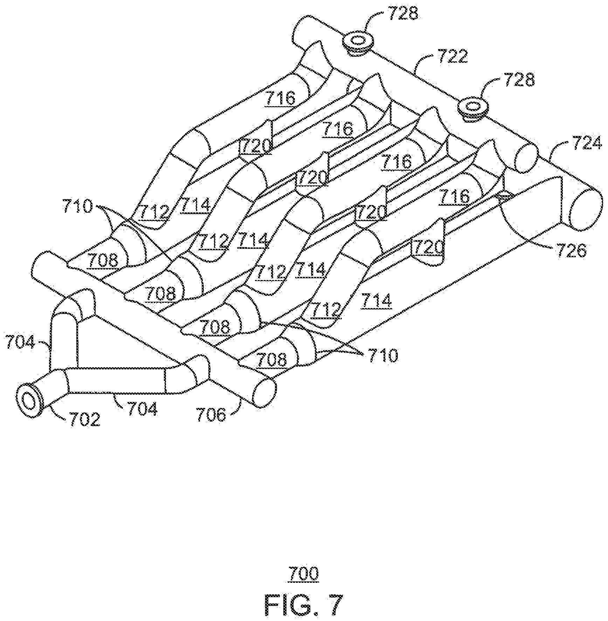

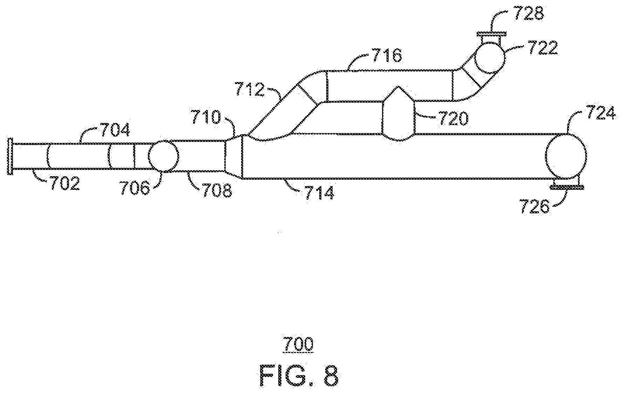

Fig. 4 is a process flow diagram showing a method **400** for separating gases and liquids within a multiphase fluid. In some embodiments, the multiphase separation system **500** discussed below with respect to Figs. 5 and 6 is used to implement the method **400.** In other embodiments, the multiphase separation system **700** discussed below with respect to Figs. 7 and 8 is used to implement the method **400.**

The method begins at block **402,** at which the multiphase fluid is flowed into a number of divisions configured to lower a velocity of the multiphase fluid. From the divisions, the multiphase fluid may be flowed into a distribution header.

At block **404,** the multiphase fluid is separated among a number of lower pipes and a number of upper pipes. Each lower pipe includes an expansion zone configured to lower a pressure within the lower pipe to allow entrained liquids to drain from a corresponding upper pipe via a downcomer.

Liquids flowing through the lower pipes may be collected within a liquid header. The liquids may then be flowed out of the multiphase separation system via a liquid outlet line. Gases flowing through the upper pipes may be collected within a gas header. The gases may then be flowed out of the multiphase separation system via a gas outlet line.

The process flow diagram of Fig. 4 is not intended to indicate that the steps of the method **400** are to be executed in any particular order, or that all of the steps of the method **400** are to be included in every cases. Further, any number of additional steps not shown in Fig. 4 may be included within the method **400,** depending on the details of the specific implementation. For example, gases may be flowed from the multiphase separation system to downstream liquid processing equipment or a gas export line, and liquids may be flowed from the multiphase separation system to downstream gas processing equipment or a liquid export line.

In various embodiments, the multiphase fluid is flowed into a distribution header configured to split the multiphase fluid among a number of pipes in a same plane as the distribution header. The multiphase fluid may be separated into gases and liquids within an expansion zone of each pipe. The gases within each pipe may be flowed into a corresponding upper pipe in a second plane disposed above a plane of the distribution header, and the liquids within each pipe may be flowed into a corresponding lower pipe in the plane of the distribution header. Entrained liquids within each upper pipe may then be drained to a corresponding lower pipe via a downcomer. In addition, entrained gases within each lower pipe may be flowed to a corresponding upper pipe via the downcomer.

In other embodiments, the multiphase fluid is separated into gases and liquids within a distribution header. The gases may be flowed into a number of upper pipes in a first plane disposed above the distribution header, and the liquids may be flowed into a number of lower pipes in a second plane disposed below the distribution header. The gases may be flowed out of the multiphase separation system via a gas outlet line, and the liquids may be flowed out of the multiphase separation system via a liquid outlet line. In addition, entrained liquids within the upper pipes may be drained to corresponding lower pipes via downcomers.

Fig. 5 is a perspective view of another non-claimed embodiment of a multiphase separation system **500.** The multiphase separation system **500** may include an inlet line **502** that is configured to allow a multiphase fluid to flow into the multiphase separation system **500.** The inlet line **502** may include a number of divisions **504** that are configured to lower the velocity of the multiphase fluid and feed the multiphase fluid into a distribution header **506.**

The distribution header **506** may be configured to split the multiphase fluid among a number of upper fingers **508** and a number of lower fingers **510.** Each upper finger **508** is angled upward to feed into a corresponding upper pipe **512** in a first plane disposed above and substantially parallel to the distribution header **506.** Each lower finger **510** is angled downward to feed into a corresponding lower pipe **514** in a second plane disposed below and substantially parallel to the distribution header **506.** In addition, each upper pipe **512** may be coupled to a corresponding lower pipe **514** via a downcomer **516.** The downcomer **516** may be configured perpendicular to the upper pipes **512** and lower pipes **514,** or may be at an oblique angle.

Each lower pipe **514** may include an expansion zone **518** that is configured to lower a velocity and a pressure of liquids within the lower pipe **514.** This may allow entrained gases within the liquids to rise to the corresponding upper pipe **512** via the downcomer **516.**

Each upper pipe **512** may feed into a common gas header **520.** The gas header **520** may be configured to lower a velocity of gases within the upper pipe **512** to allow entrained liquids, such as droplets, within the gases to coalesce and drop to the corresponding lower pipe **514** via the downcomer **516.**

The multiphase separation system **500** may also include a liquid header **522** for collecting the liquids and flowing the liquids out of the multiphase separation system **500** via liquid outlet lines **524.** In addition, the gas header **520** may include gas outlet lines **526** for flowing the gases out of the multiphase separation system **500.**

The schematic of Fig. 5 is not intended to indicate that the subsea multiphase separation system **500** is to include all of the components shown in Fig. 5. Further, any number of additional components may be included within the subsea multiphase separation system **500,** depending on the details of the specific implementation. For example, the lower pipe **514** may be extended, with or without an optional sealing downcomer, to increase residence time in the liquid phase and achieve oil/water separation. This may allow for the enhancement or the elimination of downstream oil/water separation steps and equipment. Separate oil and water outlets can be included in the liquid header **522** for flowing the oil and water out of the multiphase separation system **500.**

Fig. 6 is a side view of the non-claimed embodiment of the multiphase separation system **500** of Fig. 5. As shown in Fig. 6, the divisions **504** may be in the same plane as the inlet line **502.** Thus, the multiphase fluid may be flowed directly into the divisions **504** from the inlet line **502.** However, because the multiphase fluid is split among the divisions **504,** the velocity of the multiphase fluid is reduced. In some embodiments, the reduction in velocity of the multiphase fluid dissipates any slugs within the multiphase fluid.

The distribution header **506** may also be in the same plane as the inlet line **502.** Thus, the multiphase fluid may be flowed directly into the distribution header **506** from the divisions **504.** Within the distribution header **506,** the multiphase fluid may be split among the upper fingers **508** and the lower fingers **510.** This may further reduce the velocity of the multiphase fluid.

In some non-claimed embodiments, the distribution header **506** is a stratification section that is configured to perform an initial bulk separation of gases and liquids within the multiphase fluid. Thus, gases may be flowed into the upper fingers **508,** and liquids may be flowed into the lower fingers **510.** The gases may be flowed from the upper fingers **508** to corresponding upper pipes **512,** and the liquids may be flowed from the lower fingers **510** to corresponding lower pipes **514.** In some embodiments, the upper pipes **512** are parallel to the lower pipes **514.**

Fig. 7 is a perspective view of a multiphase separation system according to the invention 700. The multiphase separation system **700** may include an inlet line **702** configured to allow a multiphase fluid to flow into the multiphase separation system **700.** The inlet line **702** may include a number of divisions **704** configured to lower a velocity of the multiphase fluid and feed the multiphase fluid into a distribution header **706.**

The distribution header **706** is configured to split the multiphase fluid among a number of pipes **708** in a same plane as the distribution header. Each pipe **708** may include an expansion zone **710** configured to lower the velocity and the pressure of the multiphase fluid. The multiphase fluid is split between each upper finger **712** and a corresponding lower pipe **714.**

Each upper finger **712** may feed into a corresponding upper pipe **716** in a second plane disposed above and substantially parallel to the plane of the distribution header **706.** Each lower pipe **714** may be in the same plane as the distribution header **706.** In addition, each upper pipe **716** may be coupled to a corresponding lower pipe **714** via a downcomer **720.** The downcomer **720** may be configured at a right angle (as shown) or an oblique angle.

Each lower pipe **714** can be configured to allow entrained gases within liquids to rise to the corresponding upper pipe **716** via the downcomer **720.** Each upper pipe **716** may feed into a common gas header **722.** The gas header **722** may be configured to lower a velocity of gases to allow entrained liquid droplets to coalesce and drop to any of the lower pipes **714** via any of the downcomers **720.**

The multiphase separation system **700** may include a liquid header **724** for collecting the liquids from the lower pipes **714** and flowing the liquids out of the multiphase separation system **700** via liquid outlet lines **726.** In addition, the gas header **722** may include gas outlet lines **728** for flowing the gases out of the multiphase separation system **700.**

The schematic of Fig. 7 is not intended to indicate that the subsea multiphase separation system **700** is to include all of the components shown in Fig. 7. Further, any number of additional components may be included within the subsea multiphase separation system **700,** depending on the details of the specific implementation. For example, the lower pipe **714** may be extended, with or without an optional sealing downcomer, to increase residence time in the liquid phase and achieve oil/water separation. This may allow for the enhancement or the elimination of downstream oil/water separation steps and equipment. Separate oil and water outlets can be included in the liquid header **724** for flowing the oil and water out of the multiphase separation system **700.**

Fig. 8 is a side view of the multiphase separation system **700** of Fig. 7. As shown in Fig. 8, the divisions **704** may be in the same plane as the inlet line **702.** Thus, the multiphase fluid may be flowed directly into the divisions **704** from the inlet line **702.** However, because the multiphase fluid is split among the divisions **704,** the velocity of the multiphase fluid is reduced. In some embodiments, such a reduction in velocity of the multiphase fluid dissipates any slugs within the multiphase fluid.

The distribution header **706** may also be in the same plane as the inlet line **702.** Thus, the multiphase fluid may be flowed directly into the distribution header **706** from the divisions **704.** Within the distribution header **706,** the multiphase fluid may be split among the pipes **708.** Within the pipes **708,** the multiphase fluid may be flowed through the expansion zone **710,** resulting in a reduction of the pressure and velocity of the multiphase fluid.

The multiphase fluid may then be split between each of the upper fingers **712** and the corresponding lower pipe **714.** This may further reduce the velocity of the multiphase fluid. In some embodiments, the distribution header **706** acts as stratification section that is configured to perform an initial bulk separation of gases and liquids within the multiphase fluid. Thus, gases may be flowed into the upper fingers **712,** and liquids may remain in the lower pipes **714.** In addition, the gases may be flowed from the upper fingers **712** to corresponding upper pipes **716.** In some embodiments, the upper pipes **716** are parallel to the lower pipes **714.**

## Claims

1. A multiphase separation system (700), including:
an inlet line (702) configured to allow a multiphase fluid to flow into the multiphase separation system, the inlet line including a plurality of divisions (704) configured to lower a velocity of the multiphase fluid and feed the multiphase fluid into a distribution header (706);
the distribution header configured to split the multiphase fluid among a plurality of pipes (708) in a same plane as the distribution header, and wherein:
each pipe includes an expansion zone (710) upstream of an upper (712) and a lower finger that is configured to lower a pressure of the multiphase fluid prior to separating the multiphase fluid among the upper finger and the lower finger;
each upper finger feeds into a corresponding upper pipe (716) in a second plane disposed above a plane of the distribution header;
each lower finger feeds into a corresponding lower pipe (714) in the plane of the distribution header;
each upper pipe is coupled to a corresponding lower pipe by a downcomer (720);
each lower pipe is configured to allow entrained gases to rise to the corresponding upper pipe via the downcomer; and
each upper pipe is configured to allow entrained liquids to drain to the corresponding lower pipe via the downcomer.

2. The multiphase separation system of claim 1, including a liquid header (724) for collecting the liquids from the plurality of lower pipes and flowing the liquids out of the multiphase separation system via a liquid outlet line (726).

3. The multiphase separation system of any of claims 1 or 2, wherein each of the plurality of upper pipes feeds into a common gas header (722), and wherein the common gas header includes a gas outlet line (728) for flowing the gases from the plurality of upper pipes out of the multiphase separation system.

4. The multiphase separation system of any of claims 1, 2, or 3, wherein entrained gases within any of the plurality of lower pipes rise to any of the plurality of upper pipes via the corresponding downcomer.

5. The multiphase separation system of any of claims 1-4, including a stratification section upstream of each expansion zone that is configured to separate gases from liquids within the multiphase fluid.

6. The multiphase separation system of any of claims 1-5, wherein the multiphase separation system includes a slug catcher.

7. The multiphase separation system of any of claims 1-5, wherein a desander is located upstream of the inlet line or downstream of a liquid outlet line.

8. The multiphase separation system of any of claims 1-7, including;
an oil/water separation section that is coupled to each of a plurality of lower pipes and is configured to separate the liquids into oil and water;
an oil outlet line that is configured to flow the oil out of the multiphase separation system; and
a water outlet line that is configured to flow the water out of the multiphase separation system.

9. The multiphase separation system of claim 1, wherein each upper finger is raised at an acute angle relative to the distribution header, and wherein each lower finger is in the plane of the distribution header.

10. A method for separation of liquids and gases within a multiphase fluid, including:
flowing a multiphase fluid into a plurality of divisions within a multiphase separation system, wherein the plurality of divisions are configured to lower a velocity of the multiphase fluid;
flowing the multiphase fluid into a distribution header configured to split the multiphase fluid among a plurality of pipes in a same plane as the distribution header;
separating the multiphase fluid into gases and liquids within an expansion zone of each of the plurality of pipes;
separating the multiphase fluid among a plurality of lower pipes and a plurality of upper pipes, wherein each of the plurality of lower pipes includes an expansion zone upstream of a downcomer that is configured to lower a pressure within the lower pipe to allow entrained liquids to drain from a corresponding upper pipe via the downcomer;
flowing the gases within each of the plurality of pipes into a corresponding upper pipe in a second plane disposed above a plane of the distribution header; and
flowing the liquids within each of the plurality of pipes into a corresponding lower pipe in the plane of the distribution header.

11. The method of claim 10, including:
flowing gases from the multiphase separation system to downstream gas processing equipment or a gas export line; and
flowing the liquids from the multiphase separation system to downstream liquid processing equipment or a liquid export line.

12. The method of claim 10 or 11, including:
collecting the liquids within a liquid header;
flowing the liquids out of the multiphase separation system via a liquid outlet line, and collecting the gases within a gas header; and
flowing the gases out of the multiphase separation system via a gas outlet line.

13. The method of claim 10, including lowering a velocity and a pressure of the multiphase fluid by splitting the multiphase fluid among the plurality of pipes in the same plane as the distribution header.

## Patentansprüche

1. Mehrphasentrennungssystem (700) umfassend
eine Zuleitung (702), die dazu ausgelegt ist, ein Mehrphasenfluid in ein Mehrphasentrennungssystem fließen zu lassen, wobei die Zuleitung eine Vielzahl von Bereichen (704) umfasst, die dazu ausgelegt sind, eine Geschwindigkeit des Mehrphasenfluids zu verringern und das Mehrphasenfluid in einen Verteilerkopf (706) einzuspeisen,
wobei der Verteilerkopf dazu ausgelegt ist, das Mehrphasenfluid zwischen einer Vielzahl von Rohren (708) in der gleichen Ebene wie der Verteilerkopf aufzuteilen, und wobei
jedes Rohr stromaufwärts eines oberen (712) und eines unteren Fingers eine Ausdehnungszone (710) umfasst, die dazu ausgelegt ist, einen Druck des Mehrphasenfluids zu senken, bevor das Mehrphasenfluid zwischen dem oberen und dem unteren Finger getrennt wird,
wobei jeder obere Finger in ein entsprechendes oberes Rohr (716) in einer zweiten Ebene einspeist, die oberhalb einer Ebene des Verteilerkopfes angeordnet ist,
wobei jeder untere Finger in ein entsprechendes unteres Rohr (714) in der Ebene des Verteilerkopfes einspeist,
wobei jedes obere Rohr mit einem entsprechenden unteren Rohr mittels eines Fallrohrs (720) verbunden ist,
wobei jedes untere Rohr dazu ausgelegt ist, es mitgerissenen Gasen zu ermöglichen, über das Fallrohr in das entsprechende obere Rohr zu steigen, und
wobei jedes obere Rohr dazu ausgelegt ist, es mitgerissenen Flüssigkeiten zu ermöglichen, über das Fallrohr in das entsprechende untere Rohr abzulaufen.

2. Mehrphasentrennungssystem nach Anspruch 1, das eine Flüssigkeitssammelleitung (724) umfasst, um die Flüssigkeiten aus der Vielzahl der unteren Rohre zu sammeln und die Flüssigkeiten aus dem Mehrphasentrennungssystem über eine Flüssigkeitsauslassleitung (726) fließen zu lassen.

3. Mehrphasentrennungssystem nach Anspruch 1 oder 2, bei dem jedes aus der Vielzahl von oberen Rohren in eine gemeinsame Gassammelleitung (722) einspeist und bei dem die gemeinsame Gassammelleitung eine Gasauslassleitung (728) umfasst, um die Gase von der Vielzahl von oberen Rohren aus dem Mehrphasentrennungssystem fließen zu lassen.

4. Mehrphasentrennungssystem nach einem der Ansprüche 1, 2 oder 3, bei dem mitgerissene Gase innerhalb eines aus der Vielzahl von unteren Rohren über das entsprechende Fallrohr in eines aus der Vielzahl von oberen Rohren steigen.

5. Mehrphasentrennungssystem nach einem der Ansprüche 1 bis 4, das einen Schichtbildungsabschnitt stromaufwärts von jeder Ausdehnungszone einschließt, der dazu ausgelegt ist, um die Gase von den Flüssigkeiten innerhalb des Mehrphasenfluids zu trennen.

6. Mehrphasentrennungssystem nach einem der Ansprüche 1 bis 5, bei dem das Mehrphasentrennungssystem einen Schwallfänger umfasst.

7. Mehrphasentrennungssystem nach einem der Ansprüche 1 bis 5, bei dem sich ein Entsander stromaufwärts der Zuleitung oder stromabwärts einer Flüssigkeitsauslassleitung befindet.

8. Mehrphasentrennungssystem nach einem der Ansprüche 1 bis 7, umfassend
einen Öl/Wasser-Trennungsabschnitt, der mit jedem aus der Vielzahl von unteren Rohren verbunden ist und dazu ausgelegt ist, die Flüssigkeiten in Öl und Wasser zu trennen,
eine Ölausflussleitung, die dazu ausgelegt ist, das Öl aus dem Mehrphasentrennungssystem fließen zu lassen, und
eine Wasserausflussleitung, die dazu ausgelegt ist, das Wasser aus dem Mehrphasentrennungssystem fließen zu lassen.

9. Mehrphasentrennungssystem nach Anspruch 1, bei dem jeder obere Finger in einem spitzen Winkel im Verhältnis zum Verteilerkopf errichtet wird und bei dem jeder untere Finger sich in der Ebene des Verteilerkopfes befindet.

10. Verfahren zur Trennung von Flüssigkeiten und Gasen innerhalb eines Mehrphasenfluids, bei dem
ein Mehrphasenfluid in eine Vielzahl von Abschnitten innerhalb eines Mehrphasentrennungssystems fließt, wobei die Vielzahl an Abschnitten dazu ausgelegt ist, eine Geschwindigkeit des Mehrphasenfluids zu vermindern,
das Mehrphasenfluid in einen Verteilerkopf fließt, der dazu ausgelegt ist, das Mehrphasenfluid zwischen einer Vielzahl von Rohren in einer gleichen Ebene wie der Verteilerkopf zu teilen,
das Mehrphasenfluid innerhalb einer Ausdehnungszone von jedem aus der Vielzahl von Rohren in Gase und Flüssigkeiten getrennt wird,
das Mehrphasenfluid zwischen einer Vielzahl von unteren Rohren und einer Vielzahl von oberen Rohren getrennt wird, wobei jedes aus der Vielzahl von unteren Rohren eine Ausdehnungszone stromaufwärts eines Fallrohrs umfasst, die dazu ausgelegt ist, einen Druck innerhalb des unteren Rohrs zu verringern, um es mitgerissenen Flüssigkeiten zu ermöglichen, aus dem entsprechenden oberen Rohr über das Fallrohr abzulaufen,
die Gase innerhalb jedes aus der Vielzahl von Rohren in ein entsprechendes oberes Rohr in einer zweiten Ebene fließen, die oberhalb der Ebene des Verteilerkopfes angeordnet ist, und
die Flüssigkeiten innerhalb jedes aus der Vielzahl von Rohren in ein entsprechendes unteres Rohr in der Ebene des Verteilerkopfes fließen.

11. Verfahren nach Anspruch 10, bei dem
Gase von dem Mehrphasentrennungssystem zu einem nachgelagerten Gasverarbeitungsanlagenteil oder einer Gasexportleitung fließen und
die Flüssigkeiten von dem Mehrphasentrennungssystem zu einem nachgelagerten Flüssigkeitsverarbeitungsanlagenteil oder eine Flüssigkeitsexportleitung fließen.

12. Verfahren nach Anspruch 10 oder 11, bei dem
die Flüssigkeiten innerhalb ein er Flüssigkeitssammelleitung gesammelt werden,
die Flüssigkeiten über eine Flüssigkeitsausflussleitung aus dem Mehrphasentrennungssystem fließen und
die Gase innerhalb einer Gassammelleitung gesammelt werden und
die Gase über eine Gasausflussleitung aus dem Mehrphasentrennungssystem fließen.

13. Verfahren nach Anspruch 10, das die Verringerung einer Geschwindigkeit und eines Druckes des Mehrphasenfluids umfasst, indem das Mehrphasenfluid zwischen einer Vielzahl von Rohren in der gleichen Ebene wie der Verteilerkopf aufgeteilt wird.

## Revendications

1. Système de séparation polyphasique (700), comportant :
une canalisation d'entrée (702) configurée pour permettre à un fluide polyphasique de circuler dans le système de séparation polyphasique, la canalisation d'entrée comportant une pluralité de divisions (704) configurées pour abaisser une vitesse du fluide polyphasique et charger le fluide polyphasique dans un collecteur de distribution (706) ;
le collecteur de distribution configuré pour partager le fluide polyphasique entre une pluralité de tuyaux (708) dans un même plan que le collecteur de distribution, et dans lequel :
chaque tuyau comporte une zone de dilatation (710) en amont d'un doigt supérieur (712) et inférieur qui est configurée pour abaisser une pression du fluide polyphasique avant de séparer le fluide polyphasique entre le doigt supérieur et le doigt inférieur ;
chaque doigt supérieur aboutit dans un tuyau supérieur correspondant (716) dans un deuxième plan disposé au-dessus d'un plan du collecteur de distribution ;
chaque doigt inférieur aboutit dans un tuyau inférieur correspondant (714) dans le plan du collecteur de distribution ;
chaque tuyau supérieur est couplé à un tuyau inférieur correspondant par un déversoir (720) ;
chaque tuyau inférieur est configuré pour permettre aux gaz entraînés de monter jusqu'au tuyau supérieur correspondant par le déversoir ; et
chaque tuyau supérieur est configuré pour permettre aux liquides entraînés de couler jusqu'au tuyau inférieur correspondant par le déversoir.

2. Système de séparation polyphasique de la revendication 1, comportant un collecteur de liquide (724) pour collecter les liquides issus de la pluralité de tuyaux inférieurs et faire circuler les liquides hors du système de séparation polyphasique par une canalisation de sortie de liquide (726).

3. Système de séparation polyphasique de l'une quelconque des revendications 1 ou 2, dans lequel chacun de la pluralité de tuyaux supérieurs aboutit dans un collecteur de gaz commun (722), et dans lequel le collecteur de gaz commun comporte une canalisation de sortie de gaz (728) pour faire circuler les gaz issus de la pluralité de tuyaux supérieurs hors du système de séparation polyphasique.

4. Système de séparation polyphasique de l'une quelconque des revendications 1, 2 ou 3, dans lequel les gaz entraînés à l'intérieur de n'importe lequel de la pluralité de tuyaux inférieurs montent jusqu'à l'un quelconque de la pluralité de tuyaux supérieurs par le déversoir correspondant.

5. Système de séparation polyphasique de l'une quelconque des revendications 1 à 4, comportant une section de stratification en amont de chaque zone de dilatation qui est configurée pour séparer les gaz des liquides à l'intérieur du fluide polyphasique.

6. Système de séparation polyphasique de l'une quelconque des revendications 1 à 5, le système de séparation polyphasique comportant un piège à condensat.

7. Système de séparation polyphasique de l'une quelconque des revendications 1 à 5, dans lequel un dessableur est situé en amont de la canalisation d'entrée ou en aval d'une canalisation de sortie de liquide.

8. Système de séparation polyphasique de l'une quelconque des revendications 1 à 7, comportant :
une section de séparation huile/eau qui est couplée à chacun d'une pluralité de tuyaux inférieurs et est configurée pour séparer les liquides en huile et eau ;
une canalisation de sortie d'huile qui est configurée pour faire circuler l'huile hors du système de séparation polyphasique ; et
une canalisation de sortie d'eau qui est configurée pour faire circuler l'eau hors du système de séparation polyphasique.

9. Système de séparation polyphasique de la revendication 1, dans lequel chaque doigt supérieur est surélevé à un angle aigu par rapport au collecteur de distribution, et dans lequel chaque doigt inférieur est dans le plan du collecteur de distribution.

10. Procédé de séparation des liquides et des gaz à l'intérieur d'un fluide polyphasique, comportant les étapes suivantes :
faire circuler un fluide polyphasique dans une pluralité de divisions à l'intérieur d'un système de séparation polyphasique, la pluralité de divisions étant configurées pour abaisser une vitesse du fluide polyphasique ;
faire circuler le fluide polyphasique dans un collecteur de distribution configuré pour partager le fluide polyphasique entre une pluralité de tuyaux dans un même plan que le collecteur de distribution ;
séparer le fluide polyphasique en gaz et liquides à l'intérieur d'une zone de dilatation de chacun de la pluralité de tuyaux ;
séparer le fluide polyphasique entre une pluralité de tuyaux inférieurs et une pluralité de tuyaux supérieurs, chacun de la pluralité de tuyaux inférieurs comportant une zone de dilatation en amont d'un déversoir qui est configurée pour abaisser une pression à l'intérieur du tuyau inférieur pour permettre aux liquides entraînés de couler depuis un tuyau supérieur correspondant par le déversoir ;
faire circuler les gaz à l'intérieur de chacun de la pluralité de tuyaux dans un tuyau supérieur correspondant dans un deuxième plan disposé au-dessus d'un plan du collecteur de distribution ; et
faire circuler les liquides à l'intérieur de chacun de la pluralité de tuyaux dans un tuyau inférieur correspondant dans le plan du collecteur de distribution.

11. Procédé de la revendication 10, comportant les étapes suivantes :
faire circuler les gaz issus du système de séparation polyphasique jusqu'à un équipement de traitement de gaz ou une canalisation d'exportation de gaz en aval ; et
faire circuler les liquides issus du système de séparation polyphasique jusqu'à un équipement de traitement de liquide ou une canalisation d'exportation de liquide en aval.

12. Procédé de la revendication 10 ou 11, comportant les étapes suivantes :
collecter les liquides à l'intérieur d'un collecteur de liquide ;
faire circuler les liquides hors du système de séparation polyphasique par une canalisation de sortie de liquide, et collecter les gaz à l'intérieur d'un collecteur de gaz ; et
faire circuler les gaz hors du système de séparation polyphasique par une canalisation de sortie de gaz.

13. Procédé de la revendication 10, comportant l'étape consistant à abaisser une vitesse et une pression du fluide polyphasique en partageant le fluide polyphasique entre la pluralité de tuyaux dans le même plan que le collecteur de distribution.
